# EUROPEAN PATENT APPLICATION

(11) **EP 3 711 901 A1**
(43) Date of publication of application: **23.09.2020**
(21) Application number: 19872441.1
(22) Date of filing: 17.07.2019
(51) Int. Cl.: B24B 31/00, B24C 11/00, B24D 3/00, B29B 9/06, C09K 3/14

(54) **TREATMENT GRANULES, COMPOUNDING UNIT EQUIPPED WITH TREATMENT GRANULES, AND PRODUCTION METHOD FOR TREATMENT GRANULES**

(30) Priority: 17.10.2018 JP 2018195910
(71) Applicant: Daicel Corporation, Osaka 530-0011 (JP)
(72) Inventor: GA, Kyokutou, Tokyo 108-8230 (JP)
(74) Representative: Grünecker Patent- und Rechtsanwälte PartG mbB
(86) International application number: PCT/JP2019/028083
(87) International publication number: WO 2020/079902

(57) **Abstract**

A granular material for processing contains at least one of a polylactic acid or a cellulose ester, has a plurality of corners, and has a maximum particle size set to a value in a range from 0.18 mm to 3.35 mm.

## Description

### Technical Field

The present invention relates to a granular material for processing, a composite unit with a granular material for processing, and a production method of a granular material for processing.

### Background Art

A granular material, for example, is used for the purpose of processing a processing object through grinding or pulverization. As an example, such a granular material is composed of a resin material as disclosed in Patent Document 1.

In a case where a granular material formed from a resin material is produced, for example, the material is produced by cutting a linear resin material formed by extruding a molten material from an extrusion die of an extruder and pulverizing and fractionating the resultant resin pieces.

### Citation List

### Patent Document

Patent Document 1: JP 2008-528310 T

### Summary of Invention

### Technical Problem

Considering the fact that known granular materials for processing are likely to scatter during use, a material that has reduced environmental impact is desirable. Additionally, for example, in a case where a granular material for processing having a relatively small particle size is to be produced to satisfactorily process processing objects in a limited space, it is desirable to produce efficiently a granular material for processing that has excellent processability for processing objects.

Therefore, an objective of the present invention is that, in a case where a granular material for processing having a relatively small particle size is to be produced, a granular material for processing that has reduced environmental impact and has excellent processability for processing objects can be produced with high production efficiency.

### Solution to Problem

To solve the above-described problem, a granular material for processing according to an aspect of the present invention contains at least one of a polylactic acid or a cellulose ester, has a plurality of corners, and has a maximum particle size set to a value in a range from 0.18 mm to 3.35 mm.

According to the above configuration, since the granular material for processing contains at least one of a polylactic acid or a cellulose ester, biodegradability can be imparted to the granular material for processing. As a result, the granular material for processing can be biodegraded in the environment. Therefore, even in case the granular material for processing is released into the environment, the impact of the granular material for processing on the environment can be reduced.

Furthermore, the granular material for processing has a plurality of corners, and a maximum particle size of the material is set to a value in the range from 0.18 mm to 3.35 mm, and thus the particle size of the granular material for processing can be relatively small, and minute corner portions can be formed in the granular material for processing. As a result, for example, by pressing the granular material for processing against a surface of a processing object in a limited space, it is possible to easily process the processing object with a small external force.

In addition, since the granular material for processing contains at least one of a polylactic acid or a cellulose ester, for example, a raw material containing the corresponding component is supplied to an extruder to extrude a linear resin material, the material is cut, and thereby, the granular material for processing can be efficiently produced.

The granular material for processing may be formed in a polyhedral shape having a plurality of polygonal faces, and a side length of each side may be set to a value in a range from 0.18 mm to 3.35 mm. As a result, a large number of corners can be provided on the surface of the granular material for processing, and processability can be imparted to portions corresponding to a circumferential edge of each face of the polyhedron, and thus a granular material for processing having high processability can be configured.

The plurality of faces may include a face in any of triangular, square, pentagonal, and hexagonal shapes in a plan view. As a result, a granular material for processing having high processability in a portion corresponding to the circumferential edge of each face of the polyhedron of the granular material for processing can be formed.

The granular material for processing may be formed in a cylindrical shape, and a side length of each side in a side view may be set to a value in a range from 0.18 mm to 3.35 mm. As a result, a particle size of the granular material for processing can be made relatively small, and a minute corner portion can be formed on a portion between an end surface and a side surface of the cylindrical granular material for processing. Thus, for example, by pressing the granular material for processing against a surface of the processing object in a limited space, it is possible to easily process the processing object with a small external force. In addition, such a granular material for processing can be efficiently produced by, for example, supplying a raw material to an extruder, extruding a linear resin material with a circular cross section, and cutting the material.

The side length may be further set to a value in a range from 0.18 mm to a value less than 3.00 mm. According to this configuration, the side length can be reduced appropriately, and minute corner portions formed between adjacent faces can be increased in comparison to other shapes with the same weight. As a result, for example, it is possible to improve the polishing property exhibited when a processing object is polished using the granular material.

The granular material for processing may have, when viewed in one direction, a contour including a pair of sides extending in a first direction perpendicular to the one direction and separated in a second direction perpendicular to the first direction, and a degree of parallelism of the pair of sides may be set to a value in a range from 0 mm to 0.50 mm.

According to this configuration, since the pair of sides of the granular material for processing are kept in parallel with high precision, it is possible to easily make the shape of the granular material for processing uniform. As a result, processabiliy during processing of the processing object using the granular material for processing can be made uniform, and the processing object can be processed with stable quality.

The granular material for processing may have the contour including the pair of sides that are a first pair of sides, and further including a second pair of sides extending in the second direction and separated in the first direction when the granular material for processing is viewed in the one direction, the second pair of sides having a degree of parallelism set to a value in a range from 0 mm to 0.10 mm. As a result, a granular material for processing having a contour including two pairs of sides with different degrees of parallelism when viewed in the one direction is obtained. According to the granular material for processing having such a shape, it is possible to easily make the surfaces corresponding to the first pair of sides and the surfaces corresponding to the second pair of sides have different characteristics. As a result, multifunctionality of the granular material for processing can be easily achieved.

The granular material for processing may have a pair of faces separately arranged in the one direction, and with respect to a reference plane based on one face out of the pair of faces, the other face may have a degree of parallelism set to a value in a range from a value greater than 0 mm to 0.20 mm. According to the granular material for processing having such a shape, by setting the degree of parallelism of the other face to the aforementioned value, it is possible to impart moderate processability in a certain range to the face. As a result, processability exhibited when a processing object is processed using the granular material for processing can be easily adjusted.

The granular material for processing may contain at least one of the polylactic acid or the cellulose ester as a main component and have a content of an organic component and an inorganic component other than the main component set to a value in a range of less than 5 wt.%. According to this configuration, it is easy to impart biodegradability of the main component to the granular material for processing. Furthermore, hardness of the granular material for processing can be maintained at a high level, and the processability exhibited when a processing object is processed can be favorably maintained.

A composite unit according to an aspect of the present invention includes the granular material for processing described in any of the above aspects, a processing object to be processed with the granular material for processing, and
a flexible container configured to contain the granular material for processing and the processing object, in which the processing object is processed with the granular material for processing in the container by applying an external force from the outside to the container.

According to the above-described configuration, by processing the processing object using the granular material for processing in a state in which the granular material for processing and the processing object are contained in the flexible container, the granular material for processing can be efficiently brought in contact with the processing object to process the processing object while preventing the granular material for processing and the processing object from scattering in a limited space.

A production method of a granular material for processing according to an aspect of the present invention includes a first step of extrusion molding a linear resin material by extruding a molten material containing at least one of a polylactic acid or a cellulose ester from an extrusion hole at an opening circumferential edge having a maximum inner diameter set to a value in a range from 0.18 mm to 4.30 mm, and a second step of cutting the linear resin material in a direction perpendicular to an extrusion direction from the extrusion hole to obtain a granular material for processing having a plurality of corners and having a maximum particle size set to a value in a range from 0.18 mm to 3.35 mm.

According to the above-described method, since a molten material contains at least one of a polylactic acid or a cellulose ester, biodegradability can be imparted to the granular material for processing. Thus, the granular material for processing can decompose in the environment, and the impact of the granular material for processing on the environment can be reduced.

Furthermore, the granular material for processing has a plurality of corners, and a maximum particle size of the material is set to a value in the range from 0.18 mm to 3.35 mm, and thus a particle size of the granular material for processing can be relatively small, and minute corner portions can be formed in the granular material for processing. As a result, for example, by pressing the granular material for processing against a surface of a processing object in a limited space, it is possible to easily process the processing object with a small external force.

In addition, the granular material for processing configured as above can be efficiently produced by extruding the molten material from the extrusion die to extrusion molding a linear resin material, and cutting the linear resin material in a direction perpendicular to an extrusion direction from an extrusion hole.

In addition, by extrusion molding the linear resin material from the extrusion hole at the opening circumferential edge set as described above, the granular material for processing having a relatively small particle size is obtained by only cutting the linear resin material in a direction perpendicular to the extrusion direction from the extrusion hole. Thus, for example, in comparison to a production method including pulverizing and fractionating a linear resin material, a yield of the granular material for processing can be greatly improved, and production costs can be reduced by simplifying production steps.

In the first step, the molten material may be extruded from the extrusion hole at the opening circumferential edge in a shape having a plurality of vertices and having a linear distance between the adjacent vertices set to a value in a range from 0.18 mm to 4.30 mm, and thus in the second step, the granular material for processing that is formed in a polyhedral shape having a plurality of polygonal faces and having a side length of each side set to a value in a range from 0.18 mm to 3.35 mm may be obtained.

According to the above-described method, since the granular material for processing that is formed in a polyhedral shape having a plurality of polygonal faces and a side length of each side set to a value in a range from 0.18 mm to 3.35 mm is obtained, a large number of corners can be provided on the surfaces of the granular material for processing, processability can be imparted to a portion corresponding to the circumferential edge of each face of the polyhedron, and thus the granular material for processing having high processability can be configured.

In the first step, the molten material may be extruded from the extrusion hole at the opening circumferential edge in the shape formed by connecting the adjacent vertices with curved line segments bending toward a center of the opening.

According to the above-described method, in anticipation of an amount of expansion of the linear resin material that has been extruded from the extrusion hole and expanded due to a swell phenomenon, a cross-sectional shape of the linear resin material can be formed. As a result, the granular material for processing having a target shape can be easily formed.

In the first step, the molten material may be extruded from the extrusion hole at the opening circumferential edge having, in a front view of the extrusion hole, a maximum distance, between the curved line segment and a virtual line passing the adjacent vertices in a direction perpendicular to the virtual line, set to a value in a range from a value greater than 0% to 25% of the maximum inner diameter.

According to the above-described method, by extruding the molten material from the extrusion hole at which the circumferential edge shape is formed as described above, it is possible to produce the granular material for processing having a relatively small particle size, and in anticipation of an amount of expansion of the linear resin material that has been extruded from the extrusion hole and expanded due to the swell phenomenon, the cross-sectional shape of the linear resin material can be formed. As a result, it is possible to make it easier to form the granular material for processing having the target shape.

In the first step, the molten material may be extruded from the extrusion hole at the opening circumferential edge formed in a shape having a number of the vertices in a range from 3 to 6. According to this method, by extruding the molten material from the extrusion hole having the circumferential edge shape formed as described above, the granular material for processing has faces in any of triangular, square, pentagonal, and hexagonal shapes, and thus the granular material for processing having high processability in a portion corresponding to the circumferential edge of each face can be efficiently produced.

In the first step, the molten material may be extruded from the extrusion hole at the circular opening circumferential edge having a diameter set to a value in a range from 0.18 mm to 4.30 mm, and thus in the second step, the granular material for processing formed in a cylindrical shape and having a side length of each side in a side view set to a value in a range from 0.18 mm to 3.35 mm may be obtained.

According to the above-described method, since the granular material for processing formed in the cylindrical shape and having a side length of each side in a side view set to a value in the range from 0.18 mm to 3.35 mm is obtained, a particle size of the granular material for processing can be relatively small, and a minute corner portion can be formed in a portion between an end face and a side face of the cylindrical granular material for processing. As a result, for example, by pressing the granular material for processing against a surface of a processing object in a limited space, it is possible to easily process the processing object with a small external force.

In addition, the granular material for processing configured as above can be efficiently produced by extruding the molten material from the extrusion die to extrusion molding a linear resin material with a circular cross section, and cutting the linear resin material in a direction perpendicular to an extrusion direction from an extrusion hole.

In the second step, the granular material for processing having the side length further set to a value in a range from 0.18 mm to a value less than 3.00 mm may be obtained. According to this method, the side length of the produced granular material for processing can be reduced appropriately, and the minute corner portions formed between adjacent faces can be increased in comparison to other shapes with the same weight. As a result, for example, the granular material for processing is obtained which exhibits an improved polishing property when a processing object is polished.

In the second step, the granular material for processing containing at least one of the polylactic acid or the cellulose ester as a main component and having a content of an organic component and an inorganic component other than the main component set to a value in the range of less than 5 wt.% may be obtained.

According to the above-described method, it is easy to impart biodegradability of the main component to the produced granular material for processing. Furthermore, the granular material for processing having a hardness maintained at a high level and maintaining favorable processability in processing of a processing object is obtained.

In the second step, the granular material for processing may be obtained which has, when viewed in the extrusion direction from the opening circumferential edge, a contour including a pair of sides extending in a first direction perpendicular to the extrusion direction and separated in a second direction perpendicular to the first direction, the pair of sides having a degree of parallelism set to a value in a range from 0 mm to 0.50 mm. According to this method, since the pair of sides of the granular material for processing are kept parallel with high precision, it is possible to easily make the shape of a plurality of produced granular materials for processing uniform.

In the second step, the granular material for processing may be obtained which has the contour including the pair of sides that are a first pair of sides, and further including a second pair of sides extending in the second direction and separated in the first direction when the granular material for processing is viewed in the extrusion direction, the second pair of sides having a degree of parallelism set to a value in a range from 0 mm to 0.10 mm.

As a result, a granular material for processing having a contour including two pairs of sides with different degrees of parallelism when viewed in the one direction is obtained. According to the granular material for processing having such a shape, it is possible to easily make the surface corresponding to the first pair of sides and the surface corresponding to the second pair of sides have different characteristics. As a result, multifunctionality of the granular material for processing can be easily achieved.

In the second step, the granular material for processing having a pair of faces separately arranged in the one direction, and with respect to a reference plane based on one face out of the pair of faces, the other face having a degree of parallelism set to a value in a range from a value greater than 0 mm to 0.20 mm may be obtained. As a result, by setting the degree of parallelism of the other face to the aforementioned value, a granular material for processing that can impart moderate processability in a certain range to the face can be obtained.

### Advantageous Effects of Invention

According to each of the aspects of the present invention, in a case where the granular material for processing having a relatively small particle size is to be produced, a granular material for processing that has reduced environmental impact and has excellent processability for a processing object can be produced with high production efficiency.

### Brief Description of Drawings

FIG. 1 is a schematic view of an extruder according to a first embodiment.
FIG. 2 is a front view of an extrusion die of FIG. 1.
FIG. 3 is a perspective view of a granular material for processing of FIG. 1.
FIG. 4 is a schematic view of a composite unit according to the first embodiment.
FIG. 5A is a vertical cross-sectional view of the composite unit of FIG. 4 before pressing. FIG. 5B is a vertical cross-sectional view of the composite unit of FIG. 4 after pressing.
FIG. 6 is a front view of an extrusion die according to a second embodiment.
FIG. 7 is a perspective view of a granular material for processing according to the second embodiment.
FIG. 8 is a front view of an extrusion die according to a third embodiment.
FIG. 9 is a perspective view of a granular material for processing according to the third embodiment.
FIG. 10 is a front view of an extrusion die according to a fourth embodiment.
FIG. 11 is a perspective view of a granular material for processing according to the fourth embodiment.
FIG. 12 is a front view of an extrusion die according to a fifth embodiment.
FIG. 13 is a perspective view of a granular material for processing according to the fifth embodiment.
FIG. 14 is a horizontal cross-sectional view of an extrusion die according to a sixth embodiment.
FIG. 15 is a diagram illustrating a state in which a degree of parallelism of a granular material for processing of an example is being measured.
FIG. 16 is a diagram illustrating a cross-sectional shape of a cuboid example having a side length target value of 0.5 mm.
FIG. 17 is a diagram illustrating a cross-sectional shape of a cylindrical example with a side length target value of 0.5 mm.
FIG. 18 is a diagram illustrating a cross-sectional shape of a cuboid example having a side length target value of 1.0 mm.
FIG. 19 is a diagram illustrating a cross-sectional shape of a cylindrical example with a side length target value of 1.0 mm.

### Description of Embodiments

Embodiments of the present invention will be described below with reference to the drawings.

### First embodiment

### Extruder

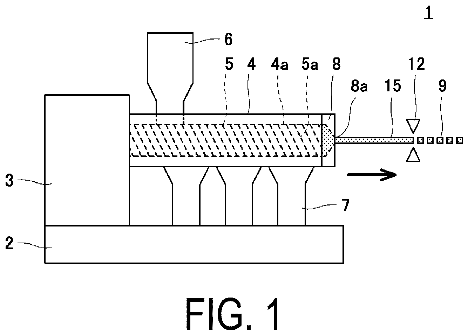

FIG. 1 is a schematic view of an extruder 1 according to a first embodiment. The extruder 1 includes a drive unit 2, a deceleration unit 3, a cylindrical unit 4, at least one (here, a pair of) screw(s) 5, a storage unit 6, a duct 7, an extrusion die 8, and a cutter (pelletizer) 12.

The drive unit 2 includes, as an example, a motor, and generates a rotary drive force that rotates the screws 5 about its axis. The deceleration unit 3 transmits the output from the drive unit 2 to the screws 5 with a reduced rotational speed. The cylindrical unit 4 has a cylindrical internal space 4a extending in a horizontal direction. The screws 5 are supported to be rotatable about axes thereof in the internal space 4a of the cylindrical unit 4. A helical groove 5a is formed on the circumferential surface of the screws 5. The deceleration unit 3 is disposed on one end side of the internal space 4a in the longitudinal direction, and the other end side in the longitudinal direction is open to the outside.

The storage unit 6 extends vertically and is disposed above the cylindrical unit 4, and has a lower end connected to the internal space 4a of the cylindrical unit 4. A raw material for granular materials for processing 9 is stored in the storage unit 6. The raw material includes at least one of a polylactic acid or a cellulose ester, and is supplied from the storage unit 6 to the internal space 4a of the cylindrical unit 4.

The duct 7 is provided to supply cooling air from a bottom of the cylindrical unit 4 to the internal space 4a. The extrusion die 8 is disposed on the other end side of the internal space 4a of the cylindrical unit 4 in the longitudinal direction, and is detachably attached to the cylindrical unit 4 at the circumferential edge of the opening of the internal space 4a. The extrusion die 8 has an extrusion hole 8a communicating with the internal space 4a of the cylindrical unit 4. The cutter 12 cuts a linear resin material 15 extruded from the extrusion hole 8a of the extrusion die 8 at predetermined time intervals. Note that, although the extruder 1 is of a biaxial type with a pair of screws 5 here, it may be of a single axis type with a single screw 5, or may be of another type.

When the extruder 1 is driven, a rotational driving force of the drive unit 2 is transmitted to the screws 5 via the deceleration unit 3 to rotate the screws 5. In addition, the raw material stored in the storage unit 6 is supplied to the internal space 4a of the cylindrical unit 4 and heated. As a result, a molten material is formed.

The molten material is pressed by the extrusion die 8 while being transported by the helical groove 5a of the screws 5 to the other end side of the internal space 4a in the longitudinal direction. The molten material is extruded out of the extrusion hole 8a of the extrusion die 8. At this time, the molten material is molded from the circumferential edge of the opening of the extrusion hole 8a, and thereby a solid linear resin material 15 is obtained. The linear resin material 15 has a cross-sectional shape corresponding to a shape of the circumferential edge of the extrusion hole 8a, and is cut by the cutter 12 in a direction perpendicular to the extrusion direction from the extrusion hole 8a. As a result, the granular materials for processing 9 are obtained.

### Extrusion Die and granular material for processing

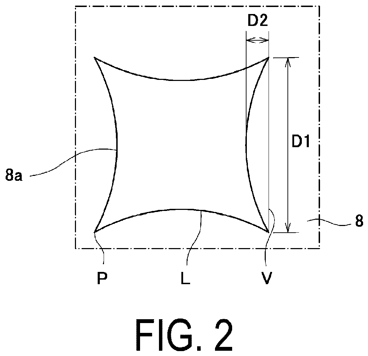

FIG. 2 is a front view of the extrusion die 8 of FIG. 1. As illustrated in FIG. 2, a maximum inner diameter of the extrusion hole 8a of the extrusion die 8 is set to a value in a range from 0.18 mm to 4.30 mm, as an example. The extrusion hole 8a has an opening circumferential edge formed in a non-circular shape. The opening circumferential edge of the extrusion hole 8a has a plurality of vertices P as an example, and adjacent vertices P are connected with curved line segments L bending toward the opening center to form a polygonal shape.

A linear distance D1 between adjacent vertices P is set to a value in the range from 0.18 mm to 4.30 mm. In a front view of the extrusion hole 8a, a maximum distance D2 between a curved line segment L and a virtual line V passing adjacent vertices P, in the direction perpendicular to the virtual line V, is set to a value in the range of greater than 0% to 25% of the maximum inner diameter of the extrusion die 8. The opening circumferential edge of the extrusion hole 8a is formed in a shape having a number of vertices P in the range from 3 to 6. Here, as an example, the extrusion hole 8a is formed in a shape such that the opening circumferential edge has four vertices P. For example, in the case of the extrusion hole 8a of FIG. 2, the maximum distance D2 is set to a value in the range from a value greater than 0 mm to 1.2 mm.

Here, when the molten material is extruded from the extrusion hole 8a of the extrusion die 8, a swell phenomenon (stress relaxation phenomenon) in which the molten material that has been compressed by the circumferential edge of the extrusion hole 8a is released and expands in a radial direction of the extrusion hole 8a may occur. When the swell phenomenon occurs, a cross-sectional shape of the linear resin material 15 may be difficult to be set to a desired shape.

To deal with this problem, in the present embodiment, by forming the opening circumferential edge of the extrusion hole 8a in a polygonal shape having a plurality of vertices P and formed by connecting the adjacent vertices P with the curved line segments L, deformation of the cross-sectional shape of the linear resin material 15 caused by the occurrence of the swell phenomenon is prevented.

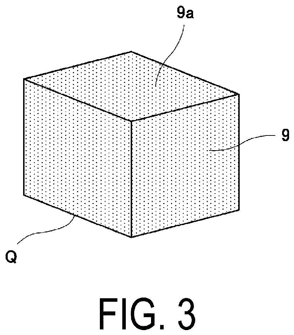

FIG. 3 is a perspective view of a granular material for processing of 9 of FIG. 1. As illustrated in FIG. 3, the granular material for processing 9 includes at least one of a polylactic acid or a cellulose ester. The granular material for processing 9 of the present embodiment contains at least one of a polylactic acid or a cellulose ester as a main component, and a content of an organic component and an inorganic component other than the main component is set to a value in the range of less than 5 wt.%. The main component referred to herein is a component contained in the granular material for processing 9 at an amount of greater than 50 wt.%.

The granular material for processing 9 has a plurality of corners and a maximum particle size is set to a value in the range from 0.18 mm to 3.35 mm. Here, the granular material for processing 9 is formed in a polyhedral shape having a plurality of polygonal faces 9a, and a length dimension (side length) of each side Q is set to a value in the range from 0.18 mm to 3.35 mm. The granular material for processing 9 according to the present embodiment has the side length further set to a value in the range from 0.18 mm to a value less than 3.00 mm (e.g., 2.9 mm).

"Corner" mentioned here refers to the vertex of an abutting position of three or more surfaces in a case where the granular material for processing 9 is formed in a polyhedral shape. In addition, in a case where the granular material for processing 9 is formed in a cylindrical shape or an elliptical cylinder shape, "corner" refers to the boundary (side) between an end surface and the side surface. In addition, in a case where the granular material for processing 9 is formed in a shape that does not correspond to any of a polyhedral shape, a cylindrical shape, and an elliptical cylinder shape, "corner" refers to at least one of the boundary (side) between two adjacent surfaces or the vertex of an abutting position of three or more surfaces. In addition, the number of vertices P can be set as appropriate, but, as an example, it is preferably 4 or less.

In addition, "side length" mentioned here refers to the linear distance between adjacent vertices P at the projection surface of the granular material for processing 9 in a front view or a side view of the polyhedral granular material for processing 9. In addition, the polyhedrons, cylinders, and elliptical cylinders mentioned here also include shapes having some shape error that may occur during production, for example. Also, in consideration of errors that may occur during manufacturing, each of the lower limit value and the maximum value of the maximum particle size of the granular material for processing 9 may include errors of a few %. In addition, when many granular materials for processing 9 are used, the granular material group may include, for example, 15 wt.% or less of materials having a maximum particle size less than 0.18 mm.

Furthermore, a value of the maximum particle size of the granular material for processing 9 is defined as a minimum value of openings of a sieve through which the granular material for processing 9 can pass among test sieves conforming to JIS Z 8801. In addition, particle size distribution of the granular material for processing 9 can be measured by a known method, for example, any of a dynamic light scattering method, a laser diffraction/scattering method, an image imaging method, and a sieving method.

The maximum particle size of the granular material for processing 9 can be set as appropriate in the range described above. The upper limit of the maximum particle size of the granular material for processing 9 can be set to, for example, any of 3.35 mm, 3.0 mm, 2.5 mm, 2.0 mm, and 1.5 mm. The lower limit of the maximum particle size of the granular material for processing 9 can be set to, for example, any of 0.18 mm, 0.20 mm, 0.30 mm, 0.40 mm, and 0.50 mm. In addition, in another example, the maximum particle size of the granular material for processing 9 is desirably set to a value in the range of 2.98 mm or less. The maximum particle size of the granular material for processing 9 typically tends to be smaller than the maximum inner diameter of the extrusion hole 8a due to the Barus effect.

The plurality of faces 9a of the granular material for processing 9 include faces 9a in any of triangular, square, pentagonal, and hexagonal shapes in a plan view (here, square only). In the present embodiment, the polyhedron is a hexahedron.

When viewed in one direction, the granular material for processing 9 has a contour including a pair of sides extending in a first direction perpendicular to the one direction and separated in a second direction perpendicular to the first direction. A degree of parallelism of the pair of sides is set to a value in the range from 0 mm to 0.50 mm.

Furthermore, when viewed in one direction, the granular material for processing 9 has a contour including the pair of sides that are a first pair of sides, and further including a second pair of sides extending in the second direction and separated in the first direction. A degree of parallelism of the second pair of sides is set to a value in the range from 0 mm to 0.10 mm. The contour of the granular material for processing 9 viewed in one direction is formed in a rectangular shape because the above-described two pairs of sides are included. As a result, the granular material for processing 9 has two pairs of surface regions with different degrees of parallelism to correspond to the above-described two pairs of sides.

In addition, the granular material for processing 9 also has a pair of faces arranged separately from each other in one direction, and with respect to a reference plane (datum plane) based on one face out of the pair of faces, a degree of parallelism of the other face is set to a value in the range from a value greater than 0 mm to 0.20 mm. As a result, a shape with a certain degree of unevenness is formed on the other face of the granular material for processing 9, which is allowed according to the range of the degree of parallelism. The pair of faces of the granular material for processing 9 of the present embodiment correspond to a cut surface at which the linear resin material 15, which will be described below, is cut.

A degree of parallelism mentioned here is defined in JIS B 0022 and JIS B 0621:1984. That is, when geometric tolerances are instructed for a related form, they indicate a magnitude of a straight line form or a planar form that is supposed to be parallel to a geometric straight line or geometric plane that is parallel to a datum straight line or a datum plane which is a theoretically correct geometric reference set to regulate the tolerance zone.

The shape, the side length of the side Q, the particle size, and the like of the granular material for processing 9 can be checked and measured using, for example, a commercially available digital microscope (e.g., "RH-2000" available from HIROX Co., Ltd.).

The granular material for processing 9 is produced by using the extruder 1. A production method of the granular material for processing 9 according to the present embodiment includes a first step of extrusion molding the linear resin material 15 by extruding a molten material containing at least one of a polylactic acid or a cellulose ester from the extrusion hole 8a at the opening circumferential edge having a maximum inner diameter set to a value in the range from 0.18 mm to 4.30 mm and a second step of cutting the linear resin material 15 in a direction perpendicular to the extrusion direction from the extrusion hole 8a to have a plurality of corners, thereby obtaining a granular material for processing 9 having a maximum particle size set to a value in the range from 0.18 mm to 3.35 mm. The linear resin material 15 is continuously cut by a rotating blade that rotates within a plane perpendicular to the extrusion direction, as an example. A method of cutting the linear resin material 15 is not limited thereto.

A maximum inner diameter of the extrusion hole 8a can be set as appropriate in the range described above. A maximum inner diameter of the extrusion hole 8a can be determined, for example, in consideration of the maximum particle size of the granular material for processing 9 to be produced, a viscosity of a resin to be used, and the like. An upper limit of the maximum inner diameter of the extrusion hole 8a can be set to, for example, any of 4.30 mm, 3.80 mm, 3.30 mm, 2.90 mm, 2.80 mm, 2.50 mm, and 2.10 mm. A lower limit of the maximum inner diameter of the extrusion hole 8a can be set to, for example, any of 0.18 mm, 0.20 mm, 0.25 mm, 0.30 mm, 0.50 mm, and 0.70 mm. In order to improve a polishing property of the granular material for processing 9 to be produced with respect to processing objects, for example, a maximum inner diameter of the extrusion hole 8a is preferably set to a value in the range of 2.80 mm or less.

In the first step of the present embodiment, the molten material is extruded from the extrusion hole 8a at the opening circumferential edge having a shape in which the linear distance D1 is set to a value in the range from 0.18 mm to 4.30 mm, and thus in the second step, the granular material for processing 9 formed in a polyhedral shape having a plurality of polygonal faces 9a and a side length of each side Q set to a value in the range from 0.18 mm to 3.35 mm can be obtained. Furthermore, in the second step of the present embodiment, the granular material for processing 9 having the side length further set to a value in the range from 0.18 mm to less than 3.00 mm can be obtained.

Furthermore, in the second step of the present embodiment, the granular material for processing 9 including at least one of a polylactic acid or a cellulose ester as a main component and having a content of an organic component and an inorganic component other than the main component set to a value in the range of less than 5 wt.% can be obtained.

Further, in the first step of the present embodiment, as an example, the molten material is extruded from the extrusion hole 8a at the opening circumferential edge in the shape formed by connecting adjacent vertices P with curved line segments L. Furthermore, in the first step of the present embodiment, the molten material is extruded from the extrusion hole 8a at an opening circumferential edge having the maximum distance D2 set to a value in the range from a value greater than 0% to 25% of the maximum inner diameter of the extrusion die 8. Furthermore, in the first step of the present embodiment, the molten material is extruded from the extrusion hole 8a at an opening circumferential edge formed in a shape having a number of vertices P in the range from 3 to 6 (here, 4).

Furthermore, in the second step of the present embodiment, the granular material for processing 9 is obtained which has, when viewed in the extrusion direction from the opening circumferential edge of the extrusion hole 8a, a contour including a pair of sides extending in the first direction perpendicular to one direction (the extrusion direction) and separated in the second direction perpendicular to the first direction, and a degree of parallelism of the pair of sides being set to a value in the range from 0 mm to 0.50 mm.

Further, in the second step of the present embodiment, the granular material for processing 9 is obtained which has a contour including the pair of sides that are a first pair of sides and further a second pair of sides extending in the second direction and separated in the first direction when viewed in the extrusion direction from the opening circumferential edge of the extrusion hole 8a, and a degree of parallelism of the second pair of sides being set to a value in the range from 0 mm to 0.10 mm.

Furthermore, in the second step of the present embodiment, the granular material for processing 9 is obtained which has a pair of faces arranged separately from each other in one direction, and with respect to a reference plane (datum plane) based on one face out of the pair of faces, the other face having a degree of parallelism set to a value in the range from a value greater than 0 mm to 0.20 mm.

### Composite Unit

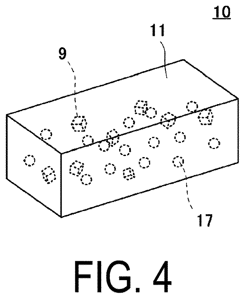

FIG. 4 is a schematic view of a composite unit 10 according to the first embodiment. The composite unit 10 includes a granular material for processing 9, a processing object 17 to be processed using the granular material for processing 9, and a flexible container 11 configured to contain the granular material for processing 9 and the processing object 17.

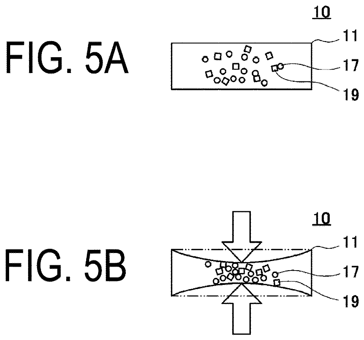

FIG. 5A is a vertical cross-sectional view of the composite unit 10 of FIG. 4 before pressing. FIG. 5B is a vertical cross-sectional view of the composite unit 10 of FIG. 4 after pressing. As illustrated in FIGS. 5A and 5B, when an external force is applied to the container 11 of the composite unit 10 from the outside, the granular material for processing 9 is strongly pressed against a surface of the processing object 17. The processing object 17 is processed by pulverization by the granular material for processing 9 or by polishing of the surface in the container 11. At this time, for example, in a case where the processing object 17 is an enclosed body in which liquid contents are enclosed, the processing object 17 is pulverized, and the contents of the processing object 17 are diffused inside the container 11.

According to the composite unit 10, by processing the processing object 17 using the granular material for processing 9 in a state in which the granular material for processing 9 and the processing object 17 are contained in the flexible container 11, the granular material for processing 9 can be efficiently brought in contact with the processing object 17 to process the processing object while preventing the granular material for processing 9 and the processing object 17 from scattering.

Note that a configuration of the processing object 17 is not limited. In addition, a flexible carrier bearing the granular material for processing 9 and the processing object 17 may be disposed inside the composite unit 10. In this case, the carrier may be constituted by, for example, a material similar to the granular material for processing 9 or another biodegradable material. Applications of the composite unit 10 include, but are not limited to, cosmetics, for example.

As described above, according to the present embodiment, the granular material for processing 9 includes at least one of a polylactic acid or a cellulose ester, and thereby biodegradability can be imparted to the granular material for processing. As a result, the granular material for processing 9 can be biodegraded in the environment. Therefore, even if the granular material for processing 9 is released into the environment, the impact of the granular material for processing 9 on the environment can be reduced.

Furthermore, the granular material for processing 9 has a plurality of corners, and the maximum particle size is set to a value in the range from 0.18 mm to 3.35 mm, and thus the particle size of the granular material for processing 9 can be relatively small, and minute corner portions can be formed in the granular material for processing 9. As a result, for example, by pressing the granular material for processing 9 against the surface of the processing object 17 in a limited space, it is possible to facilitate processing of the processing object 17 with a small external force.

In addition, since the granular material for processing 9 includes at least one of a polylactic acid or a cellulose ester, for example, a raw material containing the corresponding component is supplied to the extruder 1 to extrude the linear resin material 15, the material 15 is cut, and thereby the granular material for processing 9 can be efficiently produced.

Here, the granular material for processing 9 is often used in, for example, equipment called a sand blaster. The granular material for processing 9 is used as a medium in a case where the processing object 17 is polished using a sand blaster. A case where a small amount of medium (the granular material for processing 9) is attached to the processing object 17 that has been taken after polished using a sand blaster may be assumed. In this way, the granular material for processing 9 may be released to the environment.

In this case, the granular material for processing 9 is desirably constituted by a biodegradable material that is at least one of a polylactic acid or a cellulose ester. Furthermore, if the granular material for processing 9 contains impurities other than the biodegradable material (e.g., an organic material such as starch or wood flour, or an inorganic material), the strength of the granular material for processing 9 may decrease. Thus, in a case where the granular material for processing 9 contains impurities other than the biodegradable material, it is desirable for the impurities to be present in a content at a value in the range of less than 5 wt.% of the granular material for processing 9, and preferably a content at a value in the range of less than 1 wt.%. Note that it is most desirable for the granular material for processing 9 to not contain such impurities.

As described above, the granular material for processing 9 of the present embodiment contains at least one of a polylactic acid or a cellulose ester as a main component, and a content of an organic component and an inorganic component other than the main component is set to a value in the range of less than 5 wt.%. According to this configuration, it is easy to impart biodegradability of the main component to the granular material for processing 9. Furthermore, hardness of the granular material for processing 9 can be maintained at a high level, and the processability when the processing object 17 is processed can be favorably maintained.

In addition, since the granular material for processing 9 is formed in a polyhedral shape having a plurality of polygonal faces 9a and a side length of each side is set to a value in the range from 0.18 mm to 3.35 mm, a large number of corners can be provided on the surfaces of the granular material for processing 9, processability can be imparted to the portions corresponding to the circumferential edges of the faces of the polyhedron, and thus the granular material for processing 9 having high processability can be configured.

In addition, since the plurality of faces 9a of the granular material for processing 9 includes a face 9a in any of triangular, square, pentagonal, and hexagonal shapes in a plan view, it is possible to configure the granular material for processing 9 having high processability in the circumferential surface portion of each face of the polyhedron.

In addition, in the present embodiment, since the granular material for processing 9 is a hexahedron, for example, the granular material for processing 9 can be produced by cutting the linear resin material 15 having a rectangular cross section, and the granular material for processing 9 with excellent processability can be produced even more efficiently.

In addition, in the present embodiment, the side length of the granular material for processing 9 is further set to a value in the range from 0.18 mm to a value less than 3.00 mm. According to this configuration, the side length can be reduced appropriately, and the minute corner portions formed between adjacent faces can be increased in comparison to other shapes with the same weight. As a result, for example, a polishing property when the processing object 17 is polished using the granular material for processing 9 can be improved. In the granular material for processing 9, in a certain range, as the side length is smaller, the minute corners can be easily increased in comparison to other shapes with the same weight.

Furthermore, the granular material for processing 9 has, when viewed in one direction, the contour including the pair of sides extending in the first direction perpendicular to the one direction and separated in the second direction perpendicular to the first direction, and a degree of parallelism of the pair of sides is set to a value in the range from 0 mm to 0.50 mm.

According to this configuration, since the pair of sides of the granular material for processing 9 are kept in parallel with high precision, it is possible to easily make the shape of the granular material for processing 9 uniform. As a result, processability when the processing object 17 is processed using the granular material for processing 9 can be made uniform, and thus the processing object 17 can be processed with stable quality. Note that the granular material for processing 9 having such a configuration can be efficiently produced using, for example, the extruder 1. In this case, the extrusion direction of the linear resin material 15 from the extrusion hole 8a is a direction perpendicular to the one direction.

Furthermore, the granular material for processing 9 has the contour in which the pair of sides are the first pair of sides, the second pair of sides extending in the second direction and separated in the first direction are further included when viewed in the one direction, and a degree of parallelism of the second pair of sides is set to a value in the range from 0 mm to 0.10 mm. As a result, a granular material for processing 9 having a contour including two pairs of sides with different degrees of parallelism when viewed in the one direction is obtained. According to the granular material for processing 9 in such a shape, it is possible to easily make characteristics of the surface corresponding to the first pair of sides and the surface corresponding to the second pair of sides different from each other. As a result, it is possible to easily achieve multi-functionality of the granular material for processing 9.

In addition, the granular material for processing 9 also has the other face having a degree of parallelism set to a value in the range from a value greater than 0 mm to 0.20 mm. According to the granular material for processing 9 in such a shape, by setting a degree of parallelism of the other face to the aforementioned value, appropriate processability can be imparted to the face in a certain range. As a result, processability when the processing object 17 is processed using the granular material for processing 9 can be easily adjusted.

Furthermore, the production method of the granular material for processing 9 according to the present embodiment includes the first step and the second step, and since the molten material contains at least one of a polylactic acid or a cellulose ester, biodegradability can be imparted to the granular material for processing 9. Thus, the granular material for processing 9 can decompose in the environment, and the impact of the granular material for processing 9 on the environment can be reduced.

Furthermore, the granular material for processing 9 has a plurality of corners, and the maximum particle size is set to a value in the range from 0.18 mm to 3.35 mm, and thus the particle size of the granular material for processing 9 can be relatively small, and minute corner portions can be formed in the granular material for processing 9. As a result, for example, by pressing the granular material for processing 9 against the surface of the processing object 17 in a limited space, it is possible to facilitate processing of the processing object 17 with a small external force.

In addition, the granular material for processing 9 configured as above can be efficiently produced by extruding the molten material from the extrusion die 8 for extrusion molding the linear resin material 15, and cutting the linear resin material 15 in a direction perpendicular to the extrusion direction from the extrusion hole 8a.

In addition, in the first step, since the molten material is extruded from the extrusion hole 8a of which shape is formed by adjacent vertices P connected by the curved line segments L, in anticipation of an amount of expansion of the linear resin material 15 that has been extruded from the extrusion hole 8a and expanded due to a swell phenomenon, the cross-sectional shape of the linear resin material 15 can be formed. As a result, it is possible to easily 9 form the granular material for processing having the target shape.

In addition, by extrusion molding the linear resin material 15 from the extrusion hole 8a at the opening circumferential edge set as described above. the granular material for processing 9 having a relatively small particle size is obtained by only cutting the linear resin material 15 in the direction perpendicular to the extrusion direction from the extrusion hole. Thus, for example, in comparison to a production method including pulverizing and classifying a linear resin material, the yield of the granular material for processing 9 can be greatly improved, and production costs can be reduced by simplifying production steps.

In addition, in the first step, the molten material is extruded from the extrusion hole 8a at the opening circumferential edge having a shape in which the linear distance D1 is set to a value in the range from 0.18 mm to 4.30 mm, and thus in the second step, the granular material for processing 9 formed in a polyhedral shape having a plurality of polygonal faces 9a and a side length of each side Q set to a value in the range from 0.18 mm to 3.35 mm can be obtained.

As a result, because the granular material for processing 9 is formed in a polyhedral shape having a plurality of polygonal faces 9a and having a side length of each side set to a value in the range from 0.18 mm to 3.35 mm, a large number of corners can be provided on the surfaces of the granular material for processing 9, processability can be imparted to the portions corresponding to the circumferential edge of each face 9a of the polyhedron, and thus the granular material for processing 9 having high processability can be configured.

Further, in the first step, the molten material is extruded from the extrusion hole 8a at the opening circumferential edge in the shape formed by the curved line segments L connecting the adjacent vertices P. As a result, in anticipation of an amount of expansion of the linear resin material 15 that has been extruded from the extrusion hole 8a and expanded due to a swell phenomenon, the cross-sectional shape of the linear resin material 15 can be formed. As a result, the granular material for processing 9 having the target shape can be easily formed.

Furthermore, in the first step, the molten material is extruded from the extrusion hole 8a at the opening circumferential edge having the maximum distance D2 set to a value in the range from a value greater than 0% to 25% of the maximum inner diameter of the extrusion die 8. By extruding the molten material from the extrusion hole 8a at which the circumferential edge shape is formed as described above, it is possible to produce the granular material for processing 9 in a relatively small particle size, and in anticipation of an amount of expansion of the linear resin material 15 that has been extruded from the extrusion hole 8a and expanded due to the swell phenomenon, the cross-sectional shape of the linear resin material 15 can be formed. As a result, the granular material for processing 9 having the target shape can be more easily formed.

Furthermore, in the first step, the molten material is extruded from the extrusion hole 8a at the opening circumferential edge formed in a shape having a number of vertices P in the range from 3 to 6. According to this method, by extruding the molten material from the extrusion hole 8a having the circumferential edge shape formed as described above, the granular material for processing 9 has the faces 9a in any of triangular, square, pentagonal, and hexagonal shapes, and thus the granular material for processing 9 having high processability in a portion corresponding to the circumferential edge of each face 9a can be efficiently produced.

### Additive of granular material for processing

The granular material for processing 9 may contain a predetermined additive in addition to at least one of a polylactic acid or a cellulose ester. Examples of the additive include, for example, a plasticizer, a thermal stabilizer, a foam nucleating agent, an auxiliary foaming agent, and the like. Here, a plasticizer is unnecessary in a case where a polylactic acid is used because polylactic acids are thermally meltable. Because cellulose esters are not thermally meltable, it is desirable to use a plasticizer in a case where a cellulose ester is used.

For plasticizers, details are exemplified in "Handbook of Plasticizers," Ed. Wypych, George, ChemTec Publishing (2004). Examples of plasticizer include dimethyl phthalate; diethyl phthalate; dibutyl phthalate; dioctyl phthalate; diisononyl phthalate; butyl benzyl phthalate; butyl phthalyl butyl glycolate; tris(2-ethylhexyl)trimellitate; triethyl phosphate, triphenyl phosphate, tricresyl phosphate, p-phenylene bis(diphenyl phosphate), and other phosphate derivatives; diisobutyl adipate; bis(2-ethylhexyl)adipate; triethyl citrate; acetyl triethyl citrate; plasticizers containing citric acid (e.g., Citroflex (trade name)); monoacetin; diacetin; triacetin; tripropionin; tributyrin; sucrose acetate isobutyrate; glucose pentapropionate; triethylene glycol-2-ethylhexanoate; polyethylene glycol; polypropylene glycol; polypropylene glycol dibenzoate; polyethylene glutarate; polyethylene succinate; polyalkyl glycosides; 2,2,4-trimethyl-1,3-pentanediol isobutyrate; diisobutyrate; phthalate copolymers; 1,3-butanediol; aliphatic epoxide-terminated 1,4-butanediol; bis(2-ethylhexyl)adipate; epoxidized soybean oil; and a substance selected from the group consisting of mixtures of these compounds.

In addition, as the plasticizer, a glycerin ester plasticizer can be used. As the glycerin ester plasticizer, a lower fatty acid ester of glycerin, in other words, an ester compound of glycerin and a fatty acid having from 2 to 4 carbons can be used. A fatty acid having 2 carbons is acetic acid, a fatty acid having 3 carbons is propionic acid, and a fatty acid having 4 carbons is butyl acid. The glycerin ester plasticizer may be an ester in which all three hydroxyl groups of glycerin are esterified with the same fatty acids, an ester in which two hydroxyl groups are esterified with the same fatty acids, or an ester in which all three hydroxyl groups of glycerin are esterified with different fatty acids.

Glycerin ester plasticizers are non-toxic and easily biodegraded, and thus have a small environmental load. In addition, the addition of the glycerin ester-based plasticizer to the cellulose acetate can lower the glass transition temperature of the resulting cellulose triacetate composition for thermoforming. Thus, this can also impart excellent thermoformability to the raw material.

When the fatty acid is acetic acid, examples of the glycerin ester plasticizer include triacetin, in which three hydroxyl groups of glycerin are esterified with acetic acid, and diacetin, in which two hydroxyl groups are esterified with acetic acid.

Among the glycerin ester plasticizers described above, triacetin (glycerol trisacetate), in which all three hydroxyl groups of glycerin are esterified with acetic acid (in other words, acetylated), is preferred. Triacetin is a component recognized as safe for human intake and is easily biodegraded, and thus has a small environmental load. In addition, the cellulose acetate composition for thermoforming obtained by adding triacetin to the cellulose acetate has more improved biodegradability than in a case where the cellulose acetate is used alone. Furthermore, the addition of triacetin to the cellulose acetate can efficiently lower the glass transition temperature of the cellulose acetate. Thus, this can impart excellent thermoformability to the raw material.

Note that triacetin that is pure in terms of chemical structure and high in purity is preferred. In addition, for example, a plasticizer containing not less than 80 wt.% or not less than 90 wt.% of triacetin and the remaining weight percentage of monoacetin and/or diacetin may be used.

An amount of the glycerin ester-based plasticizer added is, with respect to 100 parts by weight of the total amount of the cellulose acetate and the glycerin ester-based plasticizer, for example, preferably a value in the range from 2 parts by weight to 40 parts by weight, more preferably a value in the range from 5 parts by weight to 40 parts by weight, even more preferably a value in the range from 10 parts by weight to 30 parts by weight, and most preferably a value in the range from 10 parts by weight to 25 parts by weight. For example, if an amount of the glycerin ester-based plasticizer added is less than 2 parts by weight, it is not possible to impart sufficient thermoformability to the cellulose acetate, and if the amount exceeds 40 parts by weight, there is a risk of the glycerin ester-based plasticizer bleeding out.

### Preparation of Raw Material for granular material for processing

As an example, the raw material of the granular material for processing 9 is obtained by blending a cellulose acetate having an acetyl substitution degree of 1.4 or higher and 1.8 or lower and a glycerin ester-based plasticizer. Examples of the method for producing this raw material include, for example, a method of directly adding a plasticizer, particularly a glycerin ester-based plasticizer, to the cellulose acetate.

In the case in which the glycerin ester-based plasticizer is to be added directly to the cellulose acetate, it is preferable to mix the cellulose acetate with the glycerin ester-based plasticizer. This mixing can be performed by a mixer such as a planetary mill, a Henschel mixer, a vibratory mill, a ball mill, or the like. It is preferable to use a Henschel mixer because it enables homogeneous mixing and dispersion in a short period of time. In addition, although a degree of mixing is not particularly limited, for example, in a case where a Henschel mixer is used, a mixing time is preferably set to about 10 minutes or longer and 1 hour or shorter.

After the cellulose acetate and the glycerin ester-based plasticizer are mixed, the mixture is dried. Examples of the drying method include, for example, a method in which a temperature is set to 50°C or higher and 105°C or lower and the mixture is left for a period of time from 1 hour to 48 hours and dried.

The above-described mixing can be performed by a mixer such as a planetary mill, a Henschel mixer, a vibration mill, and a ball mill. If the granular material for processing 9 is produced in a small amount, the mixture may be mixed using a food processor or the like. Furthermore, although mixing conditions are not particularly limited, it is preferable to add a dispersion or a solution containing a plasticizer to the cellulose acetate little by little while stirring the mixture. For example, 2 parts by weight/min to 20 parts by weight/min of a dispersion or a solution containing a plasticizer may be added to 100 parts by weight of the cellulose acetate,

A substitution degree of the cellulose acetate can be set to a value in the range from 2.2 to 2.7, for example. A substitution degree of the cellulose acetate is, for example, preferably in the range from 2.3 to 2.6, and particularly preferably a value in the range from 2.4 to 2.6. The cellulose diacetate with a substitution degree set to such a value is easily plasticized by triacetin. Therefore, for example, by using a raw material containing cellulose diacetate and triacetin, the granular material for processing 9 can be preferably produced. Another embodiment will be described below focusing on differences from the first embodiment.

### Second embodiment

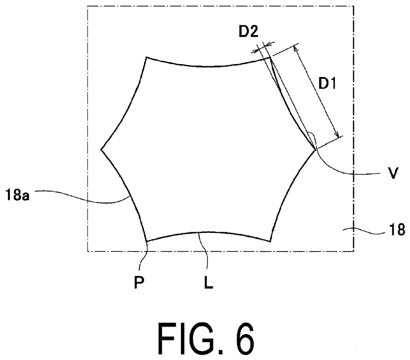

FIG. 6 is a front view of an extrusion die 18 according to the second embodiment. As illustrated in FIG. 6, the extrusion die 18 has a similar configuration to the extrusion die 8 except that the number of vertices P of an extrusion hole 18a is six. As a result, the extrusion hole 18a has a circumferential edge shape substantially in a star shape.

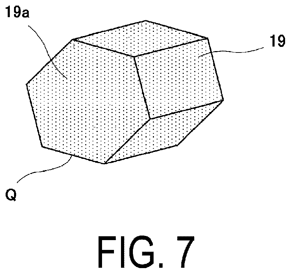

FIG. 7 is a perspective view of a granular material for processing 19 according to the second embodiment. As illustrated in FIG. 7, the granular material for processing 19 has a hexagonal face 19a in a plan view because a molten material is extruded from the extrusion hole 18a. A length dimension (side length) of each side Q defining the contour of the hexagonal face 19a is set to a value in the range from 0.18 mm to 3.35 mm. The granular material for processing 19 of the present embodiment has the side length further set to a value in the range from 0.18 mm to a value less than 3.00 mm.

### Third embodiment

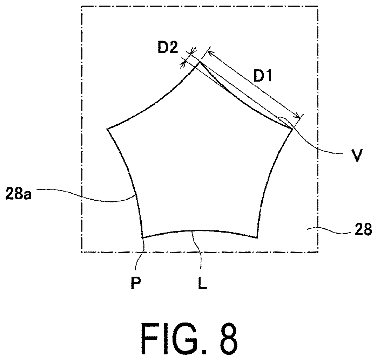

FIG. 8 is a front view of an extrusion die 28 according to a third embodiment. As illustrated in FIG. 8, the extrusion die 28 has a similar configuration to the extrusion die 8 except that the number of vertices P of the extrusion hole 28a is five. As a result, the extrusion hole 28a has a circumferential edge substantially in a star shape.

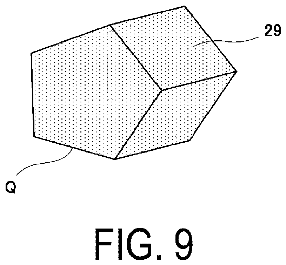

FIG. 9 is a perspective view of a granular material for processing 29 according to the third embodiment. As illustrated in FIG. 9, the granular material for processing 29 has a pentagonal face 29a in a plan view because a molten material is extruded from the extrusion hole 28a. A length dimension (side length) of each side Q defining the contour of the pentagonal face 29a is set to a value in the range from 0.18 mm to 3.35 mm. The granular material for processing 29 of the present embodiment has the side length further set to a value in the range from 0.18 mm to a value less than 3.00 mm.

### Fourth embodiment

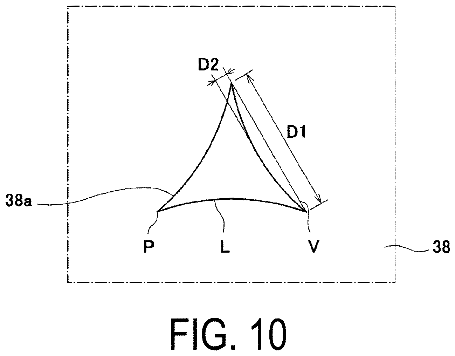

FIG. 10 is a front view of an extrusion die 38 according to a fourth embodiment. As illustrated in FIG. 10, the extrusion die 38 has a similar configuration to the extrusion die 8 except that the number of vertices P of an extrusion hole 38a is three. As a result, the extrusion hole 38a has a circumferential edge shape substantially in a triangular shape.

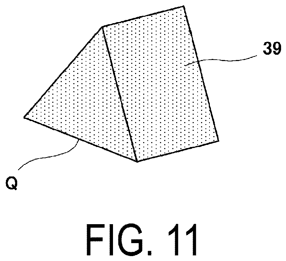

FIG. 11 is a perspective view of a granular material for processing 39 according to the fourth embodiment. As illustrated in FIG. 11, the granular material for processing 39 has an equilateral triangular face 39a in a plan view because a molten material is extruded from the extrusion hole 38a. A length dimension (side length) of each side Q defining the contour of the equilateral triangular face 39a is set to a value in the range from 0.18 mm to 3.35 mm. The granular material for processing 39 of the present embodiment has the side length further set to a value in the range from 0.18 mm to a value less than 3.00 mm.

### Fifth Embodiment

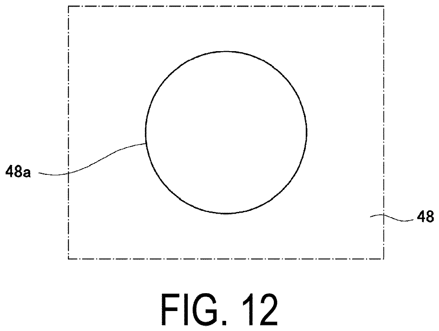

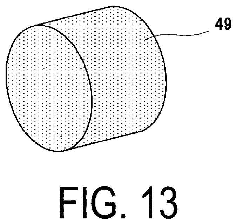

FIG. 12 is a front view of an extrusion die 48 according to a fifth embodiment. As illustrated in FIG. 12, an opening circumferential edge of an extrusion hole 48a is formed in a circular shape in the extrusion die 38. FIG. 13 is a perspective view of a granular material for processing 49 according to the fifth embodiment.

As illustrated in FIG. 13, the granular material for processing 49 is formed in a cylindrical shape, and a side length of each side Q in a side view is set to a value in the range from 0.18 mm to 3.35 mm. The granular material for processing 49 of the present embodiment has the side length further set to a value in the range from 0.18 mm to a value less than 3.00 mm.

As a result, for example, by pressing the granular material for processing 49 against a surface of the processing object 17, it is possible to easily process the processing object 17 while imparting a small external force to the granular material for processing 49.

In the first step of the fifth embodiment, because the molten material is extruded from the extrusion hole 48a at the circular opening circumferential edge having a diameter set to a value in the range from 0.18 mm to 4.30 mm, in the second step, the granular material for processing 49 formed in a cylindrical shape and having a side length of each side Q in a side view set to a value in the range from 0.18 mm to 3.35 mm is obtained. Furthermore, in the second step of the present embodiment, the granular material for processing 49 having the side length further set to a value in the range from 0.18 mm to a value less than 3.00 mm is obtained.

According to the above method, because the granular material for processing 49 formed in a cylindrical shape and having a side length of each side Q in a side view set to a value in the range from 0.18 mm to 3.35 mm is obtained, a particle size of the granular material for processing 49 can be relatively small, and a minute corner portion can be formed in a portion between an end face and a side face of the cylindrical granular material for processing 49. As a result, for example, by pressing the granular material for processing 49 against a surface of the processing object 17 in a limited space, it is possible to easily process the processing object 17 with a small external force.

In addition, the granular material for processing 49 configured as above can be efficiently produced by extruding the molten material from the extrusion die 38 for extrusion molding the linear resin material 15 having a circular cross section, and cutting the linear resin material 15 in a direction perpendicular to the extrusion direction from the extrusion hole 38a.

Note that, as a modified example of the fifth embodiment, because, in the first step, the molten material is extruded from the extrusion hole at the elliptical opening circumferential edge having a diameter in the long axis direction set to a value in the range from 0.18 mm to 4.30 mm, in the second step, the granular material for processing formed in an elliptic pillar shape and having a side length of each side Q in a side view set to a value in the range from 0.18 mm to 3.35 mm is obtained.

### Sixth Embodiment

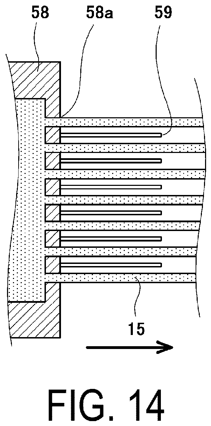

FIG. 14 is a horizontal cross-sectional view of an extrusion die 58 according to a sixth embodiment. As illustrated in FIG. 14, the extrusion die 58 includes a plurality of extrusion holes 58a disposed side by side in the horizontal direction and a plurality of partitioning members 59 for partitioning adjacent extrusion holes 58a. Although opening circumferential edges of the extrusion holes 58a have a shape similar to that of the opening circumferential edge of the extrusion hole of any of the first to fifth embodiments, they are not limited thereto. According to this configuration, a plurality of the linear resin materials 15 (strand resin materials) can be obtained at once, and the production efficiency of the granular material for processing can be greatly improved.

### Confirmation test

Although the confirmation test will be described next, the present invention is not limited to the examples introduced below.

The granular materials for processing 9 according to Examples 1 to 3 were produced using the following method.

### Preparation of Raw Material

As a cellulose ester, a cellulose acetate having an acetyl substitution degree of 2.45 (cellulose acetate produced by Daicel Corporation having a limiting viscosity of 84 mPa·s) was used. The cellulose acetate was dried in a dryer set to a temperature of 105°C in a granular form for one hour and then allowed to cool at room temperature (25°C) in a desiccator for one hour.

Then, 80 parts by weight (400 g) of the cellulose acetate was added to a mixer and stirred. During the stirring, 20 parts by weight (100 g) of triacetin was added as a plasticizer to the mixer at a rate of about 15 g/min using a pipette to be mixed with the cellulose acetate. At the time of the mixing, the mixer was stopped when half of the total amount of the triacetin was put into the mixer, and the mixture attached to the inner wall, the bottom wall, and the stirring blades of the mixer was removed. Thereafter, the remaining amount of the triacetin was added to the mixer and mixed at the above-described rate. Thereafter the mixer was stopped to remove the mixture attached to the inner wall, the bottom wall, and the stirring blades of the mixer, and the mixer was operated again for one minute or longer. As a result, a mixture was obtained.

The mixture was placed in a vat and dried at 80°C for two hours. Thereafter, the size of the mass in the mixture was adjusted using a test sieve (having an opening size of 3.35 mm) in accordance with JIS Z 8801, and thereby the raw material was prepared.

### Production of granular material for processing

The first and second steps were performed using the extruder 1 of the first embodiment (with the extrusion die 8 mounted on "Process 11" available from Thermo Fisher Scientific Co., Ltd.), and thus a granular material for processing 9 of Example 1 in a hexahedral shape with a target value of a side length of 1.5 mm (a side length set to approximately a value in the range from 1.0 mm to 1.7 mm) was obtained. The extruder 1 was set as follows to produce the granular material for processing 9.
Feed amount of raw material into internal space 4a: approximately 7 g/min
Heating temperature of raw material: a value in the range from 180°C to 220°C
Rotation speed of screw 5: 90 rpm
Formation speed of linear resin material 15: 2.5 m/min
Linear distance D1 of extrusion hole 8a of extrusion die 8: 1.5 mm

Next, the obtained granular materials for processing 9 were fractionated using test sieves (having the opening sizes set to 1.0 mm, 1.4 mm, and 1.7 mm) in accordance with JIS Z 8801. Thus, the granular materials for processing 9 of Example 1 having maximum particle sizes of less than 1.0 mm, 1.0 mm or greater but less than 1.4 mm, 1.4 mm or greater but less than 1.7 mm, and 1.7 mm or greater were sifted.

Furthermore, using a method similar to that of Example 1 except that settings of the extruder were changed as will be described below, hexahedral granular materials for processing 9 of Example 2 with a target value of a side length of 1.0 mm (approximately a value of a side length in the range from 0.85 mm to 1.18 mm) were obtained.
Formation speed of linear resin material 15: 4 m/min
Linear distance D1 of extrusion hole 8a of extrusion die 8: 1.0 mm

Next, the obtained granular materials for processing 9 were fractionated using test sieves (having the opening sizes set to 0.85 mm, 1.18 mm, and 1.4 mm) in accordance with JIS Z 8801. Thus, the granular materials for processing 9 of Example 2 having maximum particle sizes of less than 0.85 mm, 0.85 mm or greater but less than 1.18 mm, 1.18 mm or greater but less than 1.4 mm, and 1.4 mm or greater were sifted.

Furthermore, using a method similar to that of Example 1 except that settings of the extruder were changed as will be described below, hexahedral granular materials for processing 9 of Example 2 with a target value of a side length of 0.5 mm (approximately a value of a side length in the range from 0.425 mm to 0.6 mm) were obtained.
Formation speed of linear resin material 15: 11 m/min
Linear distance D1 of extrusion hole 8a of extrusion die 8: 0.5 mm

Next, the obtained granular materials for processing 9 were fractionated using test sieves (having the opening sizes set to 0.425 mm, 0.5 mm, and 0.6 mm) in accordance with JIS Z 8801. Thus, the granular materials for processing 9 of Example 2 having maximum particle sizes of less than 0.425 mm, 0.425 mm or greater but less than 0.5 mm, 0.5 mm or greater but less than 0.6 mm, and 0.6 or greater were sifted.

Next, in each of Examples 1 to 3, the surfaces of the granular materials for processing 9 in a maximum particle size range with the highest yield were observed using a commercially available digital microscope ("RH-2000," available from HIROX Co., Ltd.). At this time, in each of Examples 1 to 3, one face of each of the plurality of granular materials for processing 9 was observed in a plan view, and the maximum values and the minimum values of the side lengths of the sides Q and the maximum values and the minimum values of the internal angles between adjacent sides Q (hereinafter referred to simply as internal angles) were measured. The test results are shown in Tables 1 to 3.

**[Table 1]**

| Example 1 (side length target value: 1.5 mm) | |
|---|---|
| Nominal opening (mm) | Yield (wt.%) |
| Less than 1.0 | 0.15 |
| 1.0 or greater but less than 1.4 | 0.05 |
| 1.4 or greater but less than 1.7 | 99.61 |
| 1.7 or greater | 0.19 |

| | |
|---|---|
| Side length measured value: 1482.77 µm or greater and 1592.2 µm or less Internal angle: 89.94° or greater and 91.08° or less | |

**[Table 2]**

| Example 2 (side length target value: 1.0 mm) | |
|---|---|
| Nominal opening (mm) | Yield (wt.%) |
| Less than 0.85 | 0.1 |
| 0.85 or greater but less than 1.18 | 90.1 |
| 1.18 or greater but less than 1.4 | 9.7 |
| 1.4 or greater | 0.1 |

| | |
|---|---|
| Side length measured value: 1051.04 µm or greater and 1178.52 µm or less Internal angle: 89.08° or greater and 90.85° or less | |

**[Table 3]**

| Example 3 (side length target value: 0.5 mm) | |
|---|---|
| Nominal opening (mm) | Yield (wt.%) |
| Less than 0.425 | 7.2 |
| 0.425 or greater but less than 0.5 | 35.9 |
| 0.5 or greater but less than 0.6 | 48.4 |
| 0.6 or greater | 8.5 |

| | |
|---|---|
| Side length measured value: 486.64 µm or greater and 652.72 µm or less Internal angle: 87.65° or greater and 91.79° or less | |

As shown in Table 1, it was confirmed that, in Example 1, the yield of the granular materials for processing 9 having a side length set to a value in the range from 1.4 mm to a value less than 1.7 mm was 99.61 wt.%, and thus the granular materials for processing 9 having a side length close to the side length target value of 1.5 mm were produced with a very high yield.

In addition, as shown in Table 2, it was confirmed that, in Example 2, the yield of the granular materials for processing 9 having a side length set to a value in the range from 0.85 mm to a value less than 1.18 mm was 90.1 wt.%, and thus the granular materials for processing 9 having a side length close to the side length target value of 1.0 mm were produced with a high yield next to that of Example 1.

Furthermore, as shown in Table 3, it was confirmed that, in Example 3, the yield of the granular materials for processing 9 having a side length set to a value in the range from 0.425 mm to a value less than 0.6 mm was 84.3 (35.9 + 48.4) wt.%, and thus the granular materials for processing 9 having a side length close to the side length target value of 0.5 mm were produced with a high yield next to that of Example 2.

In addition, it was found that, in any of Examples 1 to 3, a variation in side length was suppressed, the internal angle was maintained at approximately 90°, and the granular materials for processing 9 were formed in a cuboid shape with high accuracy. In addition, it was found in another test that, when granular materials for processing 9 were produced in a similar manner to that in Example 1 except that a side length was set to a value in the range from 0.18 mm to 3.35 mm and a predetermined sieve was used, the granular materials for processing 9 could be produced with a high yield as in Examples 1 to 3.

Next, granular materials for processing 9 and 49 of the following Examples 4 to 9 were prepared using a production method similar to those of Examples 1 to 3 by adjusting the opening circumferential edge shape of the extrusion hole 8a of the extruder 1, and the like.

Specifically, a cuboid granular material for processing 9 having a side length target value of 0.5 mm was prepared as Example 4. In addition, a cylindrical granular material for processing 49 having a side length target value of 0.5 mm was prepared as Example 5. In addition, a cuboid granular material for processing 9 having a side length target value of 1.0 mm was prepared as Example 6.

In addition, a cylindrical granular material for processing 49 having a side length target value of 1.0 mm was prepared as Example 7. A cuboid granular material for processing 9 having a side length target value of 1.5 mm was prepared as Example 8. In addition, a cylindrical granular material for processing 49 having a side length target value of 1.5 mm was prepared as Example 9.

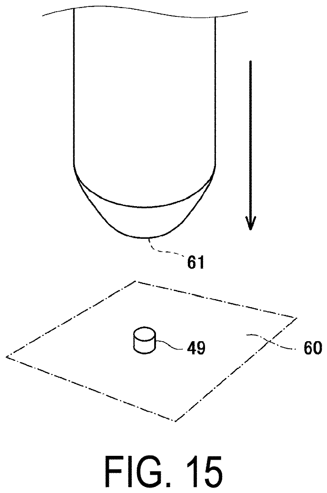

Thereafter, 3D images of the granular materials for processing 9 and 49 of Examples 4 to 9 were obtained using a commercially available digital microscope ("RH-2000" available from HIROX Co., Ltd.). Here, FIG. 15 is a diagram illustrating a state in which a degree of parallelism of the granular materials for processing 9 and 49 of Examples 4 to 9 is measured. In FIG. 15, the cylindrical granular material for processing 49 is illustrated as an example.

As illustrated in FIG. 15, here, the granular material for processing 9 or 49 was disposed on a top surface of a horizontally placed stage 60, and an objective lens 61 of the microscope was brought close to the granular material for processing 9 or 49 from one direction (the vertical direction and the extrusion direction from the extrusion hole 8a), and the granular material for processing 9 or 49 viewed in the one direction was imaged at a predetermined focal length. Thereby, a 3D image of the granular material for processing 9 was obtained. Based on this 3D image, the cross-sectional shape perpendicular to the horizontal plane of the granular material for processing 9 or 49 was calculated.

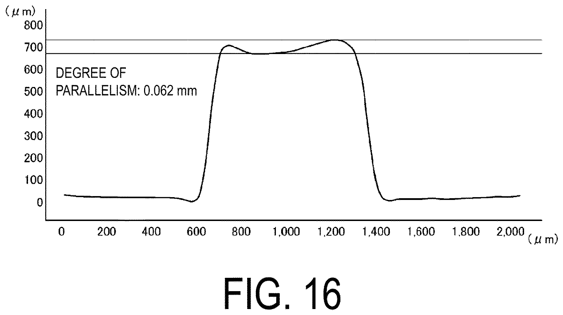

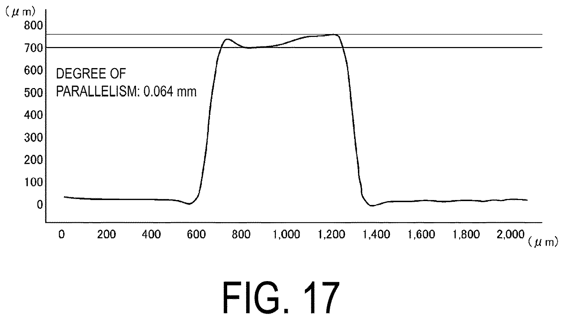

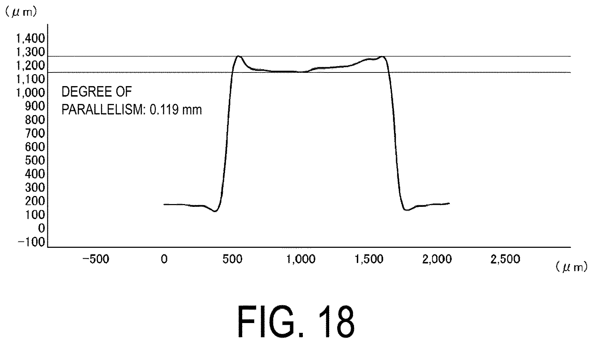

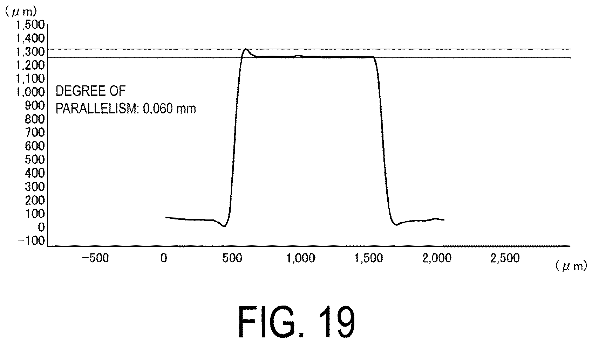

FIG. 16 is a diagram illustrating a cross-sectional shape of the granular material for processing 9 according to Example 4. FIG. 17 is a diagram illustrating a cross-sectional shape of the granular material for processing 49 according to Example 5. FIG. 18 is a diagram illustrating a cross-sectional shape of the granular material for processing 9 according to Example 6. FIG. 19 is a diagram illustrating a cross-sectional shape of the granular material for processing 49 according to Example 7. Although the widths of the cross-sectional shapes of the granular materials for processing 9 and 49 illustrated in FIG. 16 to FIG. 19 on the stage 60 side are wider than the actual widths due to the focal length, the degrees of parallelism were calculated without problems.

As illustrated in FIG. 16 to FIG. 19, it was found that all of the granular materials for processing 9 of Examples 4 to 7 have a pair of faces arranged separately from each other in one direction, and with respect to a reference plane based on one face out of the pair of faces, a degree of parallelism of the other face (the top face in each of FIG. 16 to FIG. 19) was set to a value in the range from a value greater than 0 mm to 0.20 mm.

In addition, 3D images of the granular materials for processing 9 and 49 of Examples 8 and 9 were also captured in the same manner as in Examples 4 to 7. As a result, the degree of parallelism of the other face of the granular material for processing 9 of Example 8 was found to be a value in the range from 0.060 mm to 0.085 mm. In addition, the degree of parallelism of the other face of the granular material for processing 49 of Example 9 was found to be a value in the range from 0.043 mm to 0.196 mm. As a result, it was found that the granular materials for processing 9 and 49 of Examples 8 and 9 also had faces having similar degrees of parallelism to those of the granular materials for processing 9 and 49 of Examples 4 to 7.

Next, a composite image showing contours of the granular materials for processing 9 and 49 viewed in the above-described one direction was created based on 3D images for each of Examples 4 to 9. All of the contours of the granular materials for processing 9 and 49 shown in the composite image in Examples 4 to 9 were rectangular. In addition, all of the granular materials for processing 9 and 49 of Examples 4 to 9 had a contour including a first pair of sides extending in a first direction perpendicular to one direction and separated in a second direction perpendicular to the first direction, and a second pair of sides extending in the second direction and separated in the first direction. Furthermore, it was found that a degree of parallelism of the first pair of sides was set to a value in the range from 0 mm to 0.50 mm, and a degree of parallelism of the second pair of sides was set to a value in the range from 0 mm to 0.10 mm.

The present invention is not limited to the embodiments, and the configuration and the method of the present invention can be changed, added, or deleted, without departing from the spirit of the present invention. The embodiments described above may be optionally combined with each other, and for example, some configurations or methods in one embodiment may be applied to another embodiment.

### Industrial Applicability

As described above, according to the present invention, in a case where a granular material for processing having a relatively small particle size is produced, the excellent effects of producing a granular material for processing that has reduced environmental impact and has excellent processability for a processing object with high production efficiency can be exhibited. Therefore, it is beneficial to widely apply the present invention as a granular material for processing, a composite unit provided with a granular material for processing, and a production method of a granular material for processing that can exhibit the significance of the effects.

### Reference Signs List

L Curved line segment of circumferential edge of extrusion hole
P Vertex of circumferential edge of extrusion hole
Q Side of granular material for processing
V Virtual line
8,18,28,38,48 Extrusion die
8a, 18a, 28a, 38a, 48a Extrusion hole
9, 19, 29, 39, 49 Granular material for processing
9a, 19a, 29a, 39a, 49a Face of granular material for processing
10 Composite unit
11 Container
15 Linear resin material
17 Processing object

## Claims

1. A granular material for processing comprising at least one of a polylactic acid or a cellulose ester, having a plurality of corners, and having a maximum particle size set to a value in the range from 0.18 mm to 3.35 mm.

2. The granular material for processing according to claim 1,
wherein the granular material for processing is formed in a polyhedral shape having a plurality of polygonal faces, and a side length of each side is set to a value in a range from 0.18 mm to 3.35 mm.

3. The granular material for processing according to claim 2,
wherein the plurality of faces include, in a plan view, surfaces in any of triangular, square, pentagonal, and hexagonal shapes.

4. The granular material for processing according to claim 1,
wherein the granular material for processing is formed in a cylindrical shape, and a side length of each side in a side view is set to a value in a range from 0.18 mm to 3.35 mm.

5. The granular material for processing according to any one of claims 2 to 4,
wherein the side length is further set to a value in a range from 0.18 mm to a value less than 3.00 mm.

6. The granular material for processing according to any one of claims 1 to 5,
wherein, the granular material for processing has, when viewed in one direction, a contour including a pair of sides extending in a first direction perpendicular to the one direction and separated in a second direction perpendicular to the first direction, the pair of sides having a degree of parallelism set to a value in a range from 0 mm to 0.50 mm.

7. The granular material for processing according to claim 6,
wherein the granular material for processing has the contour including the pair of sides that are a first pair of sides, and further including a second pair of sides extending in the second direction and separated in the first direction when the granular material for processing is viewed in the one direction, the second pair of sides having a degree of parallelism set to a value in a range from 0 mm to 0.10 mm.

8. The granular material for processing according to claim 6 or 7,
wherein the granular material for processing has a pair of faces separately arranged in the one direction, with respect to a reference plane based on one face out of the pair of faces, the other face having a degree of parallelism set to a value in a range from a value greater than 0 mm to 0.20 mm.

9. The granular material for processing according to any one of claims 1 to 8, containing at least one of the polylactic acid or the cellulose ester as a main component and having a content of an organic component and an inorganic component other than the main component set to a value in a range of less than 5 wt.%.

10. A composite unit comprising:
the granular material for processing described in any one of claims 1 to 9;
a processing object to be processed with the granular material for processing; and
a flexible container configured to contain the granular material for processing and the processing object,
wherein the processing object is processed with the granular material for processing in the container by applying an external force from the outside to the container.

11. A production method of a granular material for processing comprising:
a first step of extrusion molding a linear resin material by extruding a molten material containing at least one of a polylactic acid or a cellulose ester from an extrusion hole at an opening circumferential edge having a maximum inner diameter set to a value in a range from 0.18 mm to 4.30 mm; and
a second step of cutting the linear resin material in a direction perpendicular to an extrusion direction from the extrusion hole to obtain a granular material for processing having a plurality of corners and having a maximum particle size set to a value in a range from 0.18 mm to 3.35 mm.

12. The production method of a granular material for processing according to claim 11,
wherein, in the first step, a molten material is extruded from the extrusion hole at the opening circumferential edge in a shape having a plurality of vertices and having a linear distance between the adjacent vertices set to a value in a range from 0.18 mm to 4.30 mm, and in the second step, the granular material for processing is obtained which is formed in a polyhedral shape having a plurality of polygonal faces and having a side length of each side set to a value in a range from 0.18 mm to 3.35 mm.

13. The production method of a granular material for processing according to claim 12,
wherein, in the first step, the molten material is extruded from the extrusion hole at the opening circumferential edge in the shape formed by connecting the adjacent vertices with curved line segments bending toward a center of the opening.

14. The production method of a granular material for processing according to claim 13,
wherein, in the first step, the molten material is extruded from the extrusion hole at the opening circumferential edge having, in a front view of the extrusion hole, a maximum distance between the curved line segment and a virtual line passing the adjacent vertices in a direction perpendicular to the virtual line set to a value in a range from a value greater than 0% to 25% of the maximum inner diameter.

15. The production method of a granular material for processing according to any one of claims 12 to 14,
wherein, in the first step, the molten material is extruded from the extrusion hole at the opening circumferential edge formed in a shape having a number of the vertices in a range from 3 to 6.

16. The production method of a granular material for processing according to claim 11,
wherein, in the first step, the molten material is extruded from the extrusion hole at the circular opening circumferential edge having a diameter set to a value in a range from 0.18 mm to 4.30 mm, and in the second step, the granular material for processing formed in a cylindrical shape and having a side length of each side in a side view set to a value in a range from 0.18 mm to 3.35 mm is obtained.

17. The production method of a granular material for processing according to any one of claims 12 and 16,
wherein, in the second step, the granular material for processing having the side length further set to a value in a range from 0.18 mm to a value less than 3.00 mm is obtained.

18. The production method of a granular material for processing according to any one of claims 11 to 17,
wherein, in the second step, the granular material for processing containing at least one of the polylactic acid or the cellulose ester as a main component and having a content of an organic component and an inorganic component other than the main component set to a value in a range of less than 5 wt.% is obtained.

19. The production method of a granular material for processing according to any one of claims 11 to 18,
wherein, in the second step, the granular material for processing is obtained which has, when the granular material for processing is viewed in the extrusion direction from the opening circumferential edge, a contour including a pair of sides extending in a first direction perpendicular to the extrusion direction and separated in a second direction perpendicular to the first direction, the pair of sides having a degree of parallelism set to a value in a range from 0 mm to 0.50 mm.

20. The production method of a granular material for processing according to claim 19,
wherein, in the second step, the granular material for processing is obtained which has the contour including the pair of sides that are a first pair of sides, and further including a second pair of sides extending in the second direction and separated in the first direction when the granular material for processing is viewed in the extrusion direction, the second pair of sides having a degree of parallelism set to a value in a range from 0 mm to 0.10 mm.

21. The production method of a granular material for processing according to claim 19 or 20,
wherein, in the second step, the granular material for processing has a pair of faces separately arranged in the one direction, and with respect to a reference plane based on one face out of the pair of faces, the other face has a degree of parallelism set to a value in a range from a value greater than 0 mm to 0.20 mm.
